# EUROPEAN PATENT SPECIFICATION

(11) **EP 3 928 961 B1**
(45) Date of publication and mention of the grant of the patent: **01.04.2026**
(21) Application number: 21180936.3
(22) Date of filing: 22.06.2021
(51) Int. Cl.: B29C 70/02, B29C 37/00, B29C 70/08, B29C 70/42, B32B 27/12

(54) **PROCESS FOR IN-MOLD COATING OF COMPOSITE AIRCRAFT COMPONENTS**
VERFAHREN ZUR IN-MOLD-BESCHICHTUNG VON ZUSAMMENGESETZTEN FLUGZEUGKOMPONENTEN
PROCÉDÉ DE REVÊTEMENT EN MOULE DE COMPOSANTS COMPOSITES D'AÉRONEF

(30) Priority: 22.06.2020 US 202016907931
(43) Date of publication of application: 29.12.2021
(73) Proprietor: Embraer S.A., 12227-901 São José Dos Campos SP (BR)
(72) Inventor: SILVA, Rogério de Almeida, 12227-901 São José dos campos - São Paulo - SP (BR); BARBOSA, Edson da Silva, 12227-901 São José dos campos - São Paulo - SP (BR); SANTANA, João Paulo de Araujo, 12227-901 São José dos campos - São Paulo - SP (BR)
(74) Representative: Liesegang, Eva

(56) References cited:
- EP-A1- 0 228 952
- WO-A1-94/07674
- CN-A- 109 988 394
- CN-A- 110 509 573
- DE-A1- 102006 048 921
- FR-A1- 2 772 301
- "The IUPAC Compendium of Chemical Terminology : The Gold Book", 24 February 2014, INTERNATIONAL UNION OF PURE AND APPLIED CHEMISTRY (IUPAC), Research Triangle Park, NC, article NN: "curing : The Gold Book", XP093104527, DOI: 10.1351/goldbook.CT07137

## Description

### FIELD

The embodiments disclosed herein relate generally to process for forming composite aircraft components, i.e., aircraft components formed of a cured fiber-reinforced resin. According to specific embodiments, a finished surface of the composite aircraft component can be achieved by providing in-mold coating of the cured fiber-reinforced resin to thereby achieve a composite aircraft component having an exterior surface that does not necessarily require further finishing.

### BACKGROUND

Composite materials formed of a cured fiber-reinforced resin material (e.g., cured carbon fiber reinforced epoxy) are well known in the fabrication of components for aircraft, e.g., flaps, ailerons, wing fuselage fairings, vertical and horizontal stabilizers, covers, interior parts and the like. Such components must however be painted in order to protect against the external environment, e.g., humidity, liquid leakage and the like.

One drawback to the use of composite materials is that they possess surface porosities due to the inherent nature of the conventional manufacturing processes. Aircraft components formed of a composite material must undergo pre-finish steps whereby a suitable filler material, e.g., pore filler, polyester filler or primer filler, is applied in order to correct surface defects and thereby obtain parts with the required smooth and aerodynamic surfaces. Such pre-finish steps will thereby necessarily increase production times and costs as well as expose operators to
ergonomic issues since the filler material must be sanded to obtain the necessary surface quality for paint application.

It would therefore be highly desirable if composite aircraft components could be fabricated which avoid the pre-finish steps of the prior art processes. It is towards fulfilling such a need that the embodiments disclosed herein are directed.
FR 2772301 A1 describes a composite with a sliding surface that is formed by a gel coat, which is applied wet. The composite is produced as follows. A mold is provided with the desired shape of the sliding surface. Then, the wet gel coat layer is applied. Thereafter, the partial polymerization of the gel coat layer is awaited, until a sufficient viscosity is reached to prevent the subsequent passage of the gel coat through the fibers of a pre-impregnated fabric applied over the gel coat layer. Afterwards, multiple layers of fabric of fibers pre-impregnated with epoxy resin are applied to the gel coat layer. The assembly is then cured by applying heat and pressure.
EP 228952 A1 describes a process for manufacturing, by molding, an object made of synthetic material. A wall of a heated mold is coated with thermosetting material. Then, a polyester prepreg composition is placed in the mold. Subsequently, the contents of the mold are hardened and polymerized by applying heat and pressure. Finally, the object formed by the polymerized composition of the polyester prepreg on which the thermo-hardened material is firmly anchored is unmolded. The polyester prepreg composition is a sheet or a layer comprising a matrix of unsaturated polyester resin and a reinforcement of cut or continuous glass fibers.
CN 109988394 A describes that a gel coat is coated on a mold. Then, pre-curing is performed to form a gel coat layer with a thickness of 0.3 to 0.5 mm. Subsequently, a prepreg containing fiberglass and epoxy material is laid over the gel coat and cured.
CN 110509573 A describes a bumper molding method, wherein a mold release agent is applied on a surface of a mold. The mold release agent is then cured. After the release agent is cured, a gel coat is applied on the surface of the release agent to form a gel coat layer. Immediately after the gel coat is applied or after the gel coat is dry, multiple layers of prepreg are laid on the surface of the gel coat layer. Finally, curing is performed, and the bumper is obtained by demolding.

### SUMMARY

Generally, the embodiments disclosed herein are directed toward a process whereby aircraft parts fabricated from a composite material (e.g., a cured fiber-reinforced resin material) may be subject to in- mold coating so that the cured component will exhibit the desired finished external surface when removed from the component mold.

According to specific embodiments, a process for making a composite aircraft component is provided whereby a contoured mold is provided so that a layer of a curable primer material may be applied onto an interior surface of the mold. The primer material is subsequently cured to form a cured layer of the primer material on the interior surface of the mold following which one or more prepreg layers of fiber reinforced uncured resin may be laid-up onto the cured primer layer to provide a component preform comprised of the mold having the cured layer of primer material and one or more prepreg layers thereon. The resulting preform may then be subjected to pressure and temperature conditions sufficient to cure the one or more prepreg layers and bond the prepreg layers to the cured layer of primer material and thereby form the
composite aircraft component. Upon removal of the composite aircraft component from the mold, the cured layer of primer material will thereby form a finished surface of the composite aircraft component. The primer material is a curable epoxy paint that contains pigments and UV inhibitors.

The curable primer material (the epoxy paint) is sprayed onto the interior surface of the mold. The prepreg layers may comprise reinforcement fibers selected from the group consisting of carbon, glass or aramid fibers impregnated with a curable resin, e.g., a curable epoxy resin.

These and other aspects and advantages of the present invention will become more clear after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIG. 1 is a schematic diagram depicting the steps according to an embodiment of the process according to the present invention;
FIG. 2 is a schematic view of the application of a curable primer onto an interior surface of a component mold;
FIG. 3 is a schematic view of the component mold depicted in FIG. 2 with a cured layer of the primer on the interior surface thereof;
FIG. 4 is a schematic view showing the lay-up of curable fiber-reinforced polymeric sheets onto the cured layer of the primer of the component mold depicted in FIG. 3;
FIG. 5 schematically depicts the component mold having layers of fiber-reinforced polymeric sheets laid up on the cured layer of the primer being subject to curing in a curing oven; and
FIG. 6 schematically shows the cured component de-molded from the component mold.

### DETAILED DESCRIPTION OF EMBODIMENTS

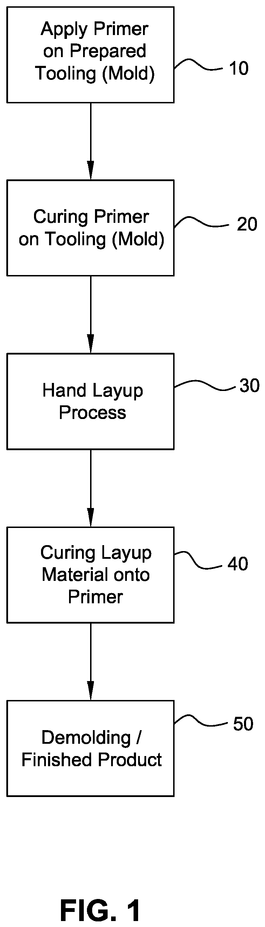

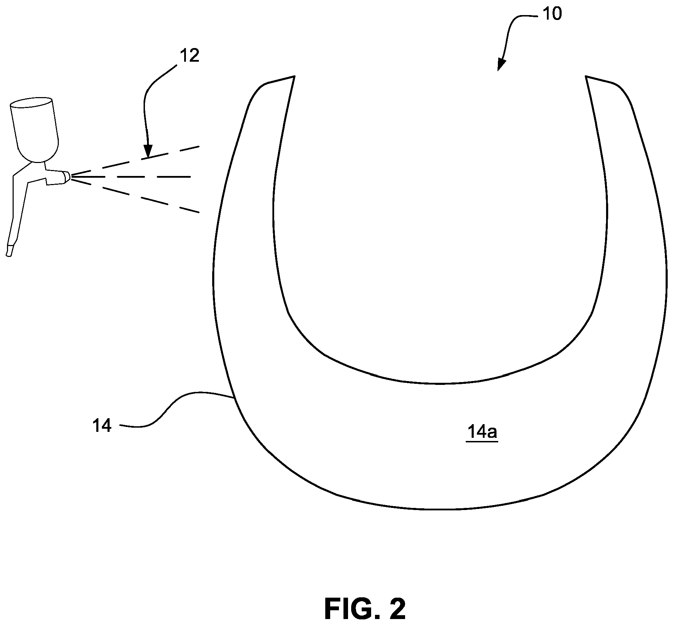

As is shown in FIG. 1 an embodiment of the process according to this invention involves a step 10 whereby a curable primer material onto the interior surface of a suitably configured mold (tooling). Accompanying FIG. 2 depicts step 10 whereby the curable primer material 12 may be sprayed onto the interior surface 14a of the mold 14. The primer material 12 can be any suitable curable material that is compatible with the fiber reinforced polymeric materials that are subsequently laid-up thereon. The primer material 12 is a curable epoxy paint that contains pigments and UV inhibitors.

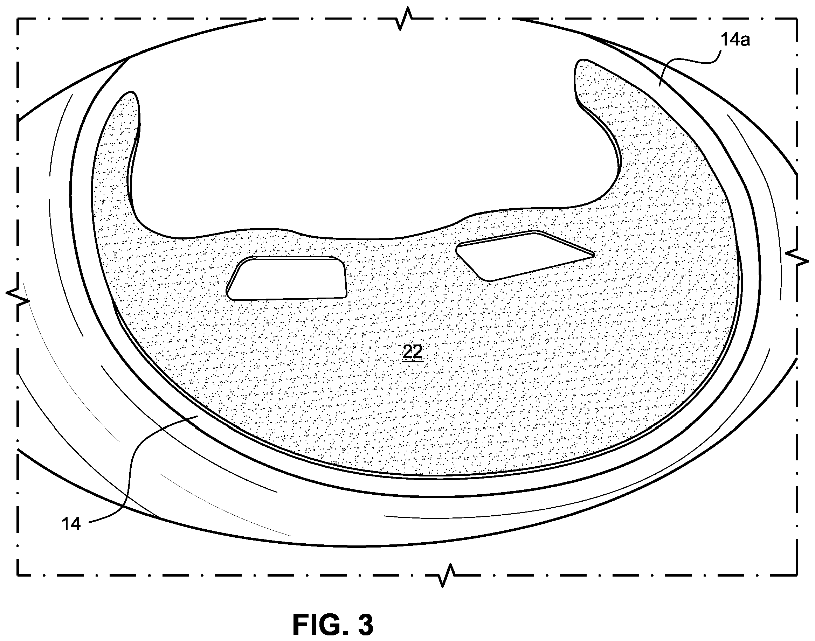

Once a suitable layer thickness (typically between about 60µm to about 160µm) of the primer material is applied onto the interior surface 14a of the mold 14, the mold can be cured according to step 20 (e.g., by placement in a curing oven) so as to cure the primer layer. The mold 14 containing a layer of the cured primer material (now designated as reference numeral 22) on the interior surface 14a of the mold 14 is depicted in accompanying FIG. 3.

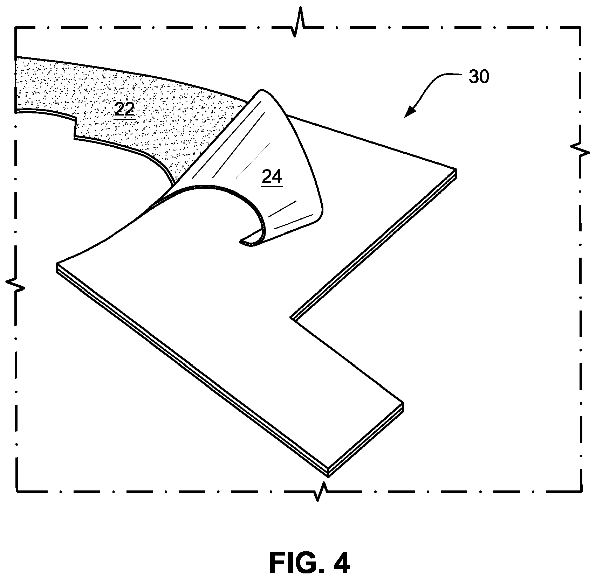

The cured layer 22 of primer material is maintained on the interior surface of the mold 14 so that operators can then apply in step 30 one or more layers or plies 24 of fiber-reinforced composite sheets. Such a lay-up procedure is schematically depicted in FIG. 4. As noted above, the uncured composite plies that may be employed according to the embodiments disclosed herein may be comprised of uncured (or partially cured) resin pre-impregnated carbon, glass or aramid fibers (i.e., so called "prepregs" in art parlance). The fibers of the prepreg plies will typically be
oriented unidirectionally with respect to one another. In practice, therefore, there are typically several individual plies of curable fiber- reinforced prepregs 24 with adjacent layers being laid such that the fiber direction of one plie is biased or at an angle with respect to the fiber directions in adjacent plies so as to enhance strength of the resulting component. The curable fiber-reinforced prepregs 24 are laid up so as to achieve a desired thickness according to the design of the particular component being constructed.

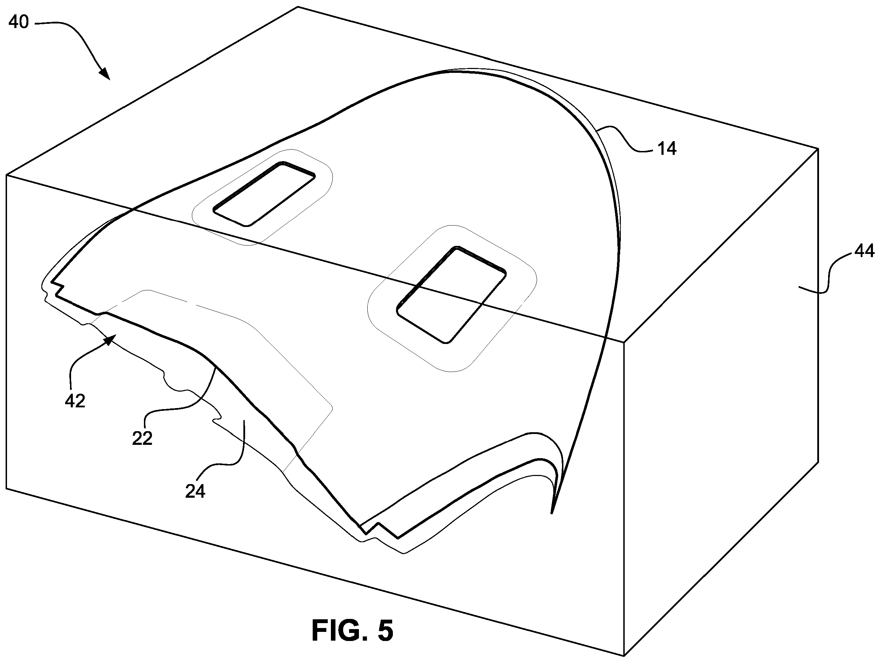

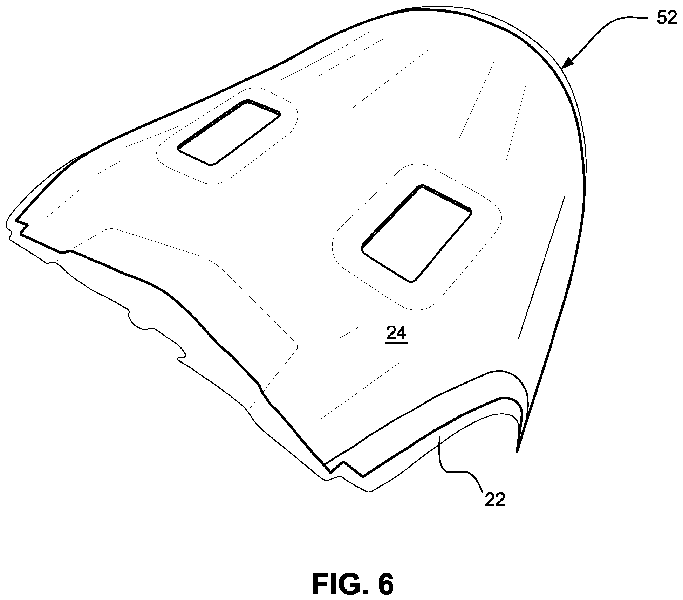

The preform designated by reference numeral 42 in FIG. 5 comprised of the mold 14, the cured primer layer 22 and the curable prepreg plies 24 may then be cured, for example, within a curing oven 44 in step 40. Curing of the prepreg plies 24 is therefore accomplished under suitable elevated pressure and temperature conditions to achieve fully curing of the resin in the prepreg plies 24 and thereby bond the plies one to another and to the cured primer layer 22. Upon demolding in step 50, a finished component designed by reference numeral 52 in FIG. 6 is achieved. Specifically, the component 52 will include a finished external surface comprised of the cured primer layer 22 which is bonded to the cured prepreg plies 24 on the interior surface thereof. As such, the component 52 will not possess the typical defects associated with conventional processes but instead will have a finished exterior surface that does not necessarily require the application of any fillers and subsequent sanding. Additionally, the cured primer layer 22 does not necessarily need to be painted if it contains suitable pigment coloring needed for the finished component 52.

The invention is defined by the independent claims. Advantageous embodiments of the invention are given in the dependent claims.

## Claims

1. A process for making a fiber-reinforced composite aircraft component having a finished exterior surface, wherein the process comprises the steps of:
(a) providing a contoured mold (14) defining an interior mold surface (14a);
(b) spraying a curable primer material (12) onto the interior mold surface (14a) to form a coating layer of the curable primer material, wherein the curable primer material is an epoxy paint containing pigments and UV inhibitors;
(c) pre-curing the coating layer of the curable primer material (12) to form a pre-cured coating layer of the primer material (22) on the interior mold surface (14a);
(d) laying-up one or more prepreg plies (24) of fiber-reinforced uncured resin on the pre-cured coating layer of the primer material (22) to provide the mold with a component preform comprised of (i) the pre-cured coating layer of the primer material (22) on the interior mold surface (14a) and (ii) the one or more prepreg plies (24) in contact with the pre-cured coating layer (22);
(e) subjecting the component preform in the mold (14) to elevated pressure and temperature conditions sufficient to cure the uncured resin in the one or more prepreg plies (24) and to bond the one or more prepreg plies (24) to the pre-cured coating layer of the primer material (22) to thereby form the fiber-reinforced composite aircraft component (52); and thereafter
(f) removing the fiber-reinforced composite aircraft component (52) from the mold (14) such that the pre-cured coating layer of the primer material (22) forms the finished exterior surface of the fiber-reinforced composite aircraft component (52).

2. The process according to claim 1, wherein the step (b) is practiced to form a primer layer which has a thickness of between about 60µm to about 160µm.

3. The process according to claim 1 or claim 2, wherein the one or more prepreg plies (24) comprise reinforcement fibers selected from the group consisting of carbon, glass or aramid fibers impregnated with a curable resin.

4. The process according to claim 3, wherein the one or more prepreg plies (24) comprise carbon fibers impregnated with a curable epoxy resin.

## Patentansprüche

1. Verfahren zum Herstellen einer faserverstärkten Luftfahrzeugverbundkomponente mit einer endbearbeiteten Außenfläche, wobei das Verfahren die folgenden Schritte umfasst:
(a) Bereitstellen einer konturierten Form (14), die eine innere Formfläche (14a) definiert;
(b) Sprühen eines aushärtbaren Primermaterials (12) auf die innere Formfläche (14a), um eine Beschichtungsschicht des aushärtbaren Primermaterials zu bilden, wobei das aushärtbare Primermaterial eine Epoxidfarbe ist, die Pigmente und UV-Inhibitoren enthält;
(c) Vorhärten der Beschichtungsschicht des aushärtbaren Primermaterials (12), um eine vorausgehärtete Beschichtungsschicht des Primermaterials (22) auf der inneren Formfläche (14a) zu bilden;
(d) Aufbringen von einer oder mehreren Prepeg-Lagen (24) von faserverstärktem nicht ausgehärtetem Harz auf die vorausgehärtete Beschichtungsschicht (22), um die Form mit einer Komponentenvorform zu versehen, die (i) die vorausgehärtete Beschichtungsschicht des Primermaterials (22) auf der inneren Formfläche (14a) und (ii) die eine oder die mehreren Prepeg-Lagen (24) in Kontakt mit der vor ausgehärteten Beschichtungsschicht (22) aufweist;
(e) Aussetzen der Komponentenvorform in der Form (14) erhöhten Druck- und Temperaturbedingungen, die ausreichend sind, um das nicht ausgehärtete Harz in der einen oder den mehreren Prepeg-Lagen (24) auszuhärten und die eine oder die mehreren Prepeg-Lagen (24) der vorausgehärteten Beschichtungsschicht des Primermaterials (22) zu verkleben, um dadurch die faserverstärkte Luftfahrzeugverbundkomponente (52) zu bilden, und danach
(f) Entfernen der faserverstärkten Luftfahrzeugverbundkomponente (52) aus der Form (14), derart, dass die vorausgehärtete Beschichtungsschicht des Primermaterials (22) die endbearbeitete Außenfläche der faserverstärkten Luftfahrzeugverbundkomponente (52) bildet.

2. Verfahren nach Anspruch 1, wobei der Schritt (b) ausgeführt wird, um eine Primerschicht zu bilden, die eine Dicke zwischen ungefähr 60 µm und ungefähr 160 µm aufweist.

3. Verfahren nach Anspruch 1 oder Anspruch 2, wobei die eine oder die mehreren Prepeg-Lagen (24) Verstärkungsfasern umfassen, die aus der Gruppe ausgewählt sind, die aus mit einem aushärtbaren Harz imprägnierten Kohlenstoff-, Glas- oder Aramidfasern besteht.

4. Verfahren nach Anspruch 3, wobei die eine oder die mehreren Prepeg-Lagen (24) Kohlenstofffasern umfassen, die mit einem aushärtbaren Epoxidharz imprägniert sind.

## Revendications

1. Procédé de fabrication d'un composant d'aéronef composite renforcé de fibres ayant une surface extérieure finie, le procédé comprenant les étapes consistant à :
(a) fournir un moule profilé (14) définissant une surface interne du moule (14a) ;
(b) pulvériser un matériau d'apprêt polymérisable (12) sur la surface interne du moule (14a) afin de former une couche de revêtement du matériau d'apprêt polymérisable, le matériau d'apprêt polymérisable étant une peinture époxy contenant des pigments et des inhibiteurs UV ;
(c) effectuer une prépolymérisation de la couche de revêtement du matériau d'apprêt polymérisable (12) afin de former une couche de revêtement prépolymérisée du matériau d'apprêt (22) sur la surface interne du moule (14a) ;
(d) disposer un ou plusieurs plis de préimprégné (24) de résine non polymérisée renforcée de fibres sur la couche de revêtement prépolymérisée du matériau d'apprêt (22) afin de fournir au moule une préforme de composant comprenant (i) la couche de revêtement prépolymérisée du matériau d'apprêt (22) sur la surface interne du moule (14a) et (ii) le ou les plis de préimprégné (24) en contact avec la couche de revêtement prépolymérisée (22) ;
(e) soumettre la préforme de composant dans le moule (14) à des conditions de pression et de température élevées suffisantes pour polymériser la résine non polymérisée dans le ou les plis de préimprégné (24) et pour lier le ou les plis de préimprégné (24) à la couche de revêtement prépolymérisée du matériau d'apprêt (22), de manière à former le composant d'aéronef composite renforcé de fibres (52) ; puis
(f) retirer le composant d'aéronef composite renforcé de fibres (52) du moule (14) de sorte que la couche de revêtement prépolymérisée du matériau d'apprêt (22) forme la surface extérieure finie du composant d'aéronef composite renforcé de fibres (52).

2. Procédé selon la revendication 1, dans lequel l'étape (b) est réalisée de manière à former une couche d'apprêt qui a une épaisseur de 60 à 160 µm environ.

3. Procédé selon l'une quelconque des revendications 1 à 2, dans lequel le ou les plis de préimprégné (24) comprennent des fibres de renforcement choisies dans le groupe constitué de fibres de carbone, de fibres de verre ou de fibres d'aramide imprégnées d'une résine polymérisable.

4. Procédé selon la revendication 3, dans lequel le ou les plis de préimprégné (24) comprennent des fibres de carbone imprégnées d'une résine époxy polymérisable.
